# EUROPEAN PATENT APPLICATION

(11) **EP 2 784 650 A1**
(43) Date of publication of application: **01.10.2014**
(21) Application number: 12879395.7
(22) Date of filing: 06.12.2012
(51) Int. Cl.: G06F 3/0487

(54) **A CALLING METHOD FOR APPLICATION OBJECT AND ITS MOBILE TERMINAL**

(30) Priority: 21.06.2012 CN 201210207105
(71) Applicant: Huawei Device Co., Ltd., Shenzhen, Guangdong 518129 (CN)
(72) Inventor: DENG, Junjie, Shenzhen Guangdong 518129 (CN)
(74) Representative: Pfenning, Meinig & Partner GbR
(86) International application number: PCT/CN2012/086083
(87) International publication number: WO 2013/189155

(57) **Abstract**

Embodiments of the present invention provide a method for calling an application object and a mobile terminal, which are used to call an application object quickly and improve user experience. An embodiment of the present invention includes: acquiring a motion state and an inclination angle of a mobile terminal; and when the motion state and the inclination angle of the mobile terminal meet a preset condition, calling an application object, where the application object includes at least one of application setting, operating parameter setting, and an application shortcut.

## Description

### CROSS-REFERENCE TO RELATED APPLICATION

This application claims priority to Chinese Patent Application No. 201210207105.5, filed with the Chinese Patent Office on June 21, 2012 and entitled "METHOD FOR CALLING APPLICATION OBJECT AND MOBILE TERMINAL", which is incorporated herein by reference in its entirety.

### TECHNICAL FIELD

The present invention relates to the field of communication technologies, and in particular, to a method for calling an application object and a mobile terminal.

### BACKGROUND

With the rapid development of mobile communications, abundant applications are running on all current mobile terminals. In addition, a lot of applications provide various application objects for a user to select, where application objects refer to application setting, operating parameter setting, and application shortcuts.

However, it is found during actual operations that when the user switches an application, certain physical buttons need to be provided for the user to select, where the physical buttons are buttons such as a multitask button and a menu button, disposed on an enclosure of the mobile terminal, which are not visual and not convenient and cause poor user experience. In addition, with the emerging and development of full touch-screen mobile terminals, it is not difficult to notice that hard buttons tend to be gradually no longer used, for example, an exit button is no longer used at a lower part of a screen of an iPhone mobile phone, and four functional buttons are no longer used at a lower part of a screen of an Android mobile phone. In this case, how to quickly switch an application and call an application object has become a very important factor that affects user experience.

### SUMMARY

Embodiments of the present invention provide a method for calling an application object and a mobile terminal, which are used to quickly call an application object and improve user experience.

In view of this, the embodiments of the present invention provide the following:

A method for calling an application object includes:
acquiring a motion state and an inclination angle of a mobile terminal; and
when the motion state and the inclination angle of the mobile terminal meet a preset condition, calling an application object, where the application object includes at least one of application setting, operating parameter setting, and an application shortcut.

A mobile terminal includes:
an acceleration sensor, configured to acquire a motion state of the mobile terminal;
a gyroscope sensor, configured to acquire an inclination angle of the mobile terminal;
a controller, configured to, when the motion state acquired by the acceleration sensor and the inclination angle acquired by the gyroscope sensor meet a preset condition, control calling of an application object, where the application object includes at least one of application setting, operating parameter setting, and an application shortcut; and
a display, configured to display the called application object.

As can be seen from the foregoing technical solution, according to the method for calling an application object and the mobile terminal provided in the embodiments of the present invention, a state change of a mobile terminal is considered as a conscious operation of a user, and whether an application object needs to be called is determined according to a motion state and an inclination angle of the mobile terminal. This is convenient and efficient and easy to operate, thereby improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for calling an application object according to an embodiment of the present invention;
FIG. 2 is a flowchart of another method for calling an application object according to an embodiment of the present invention;
FIG. 3a and FIG. 3b are schematic processes of a method for calling an application object according to an embodiment of the present invention;
FIG. 4 is a flowchart of another method for calling an application object according to an embodiment of the present invention;
FIG. 5 is a flowchart of another method for calling an application object according to an embodiment of the present invention; and
FIG. 6 is schematic structural diagram of a mobile terminal according to an embodiment of the present invention.

### DESCRIPTION OF EMBODIMENTS

Embodiments of the present invention provide a method for calling an application object and a mobile terminal, which are used to quickly call an application object and improve user experience.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The following describes each of the embodiments of the present invention in detail.

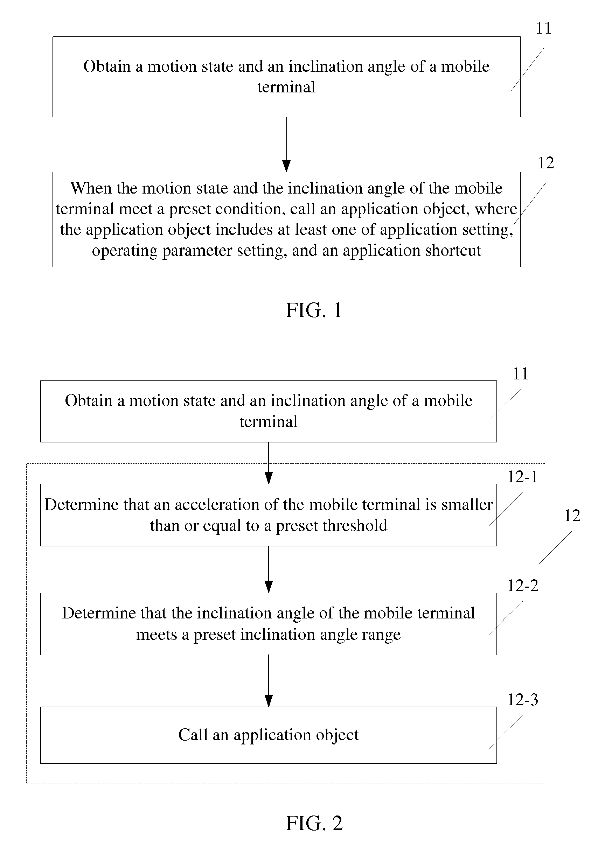

Referring to FIG. 1, FIG. 1 is a flowchart of a method for calling an application object according to an embodiment of the present invention, where the method includes:
Step 11: Acquire a motion state and an inclination angle of a mobile terminal.
Step 12: When the motion state and the inclination angle of the mobile terminal meet a preset condition, call an application object, where the application object includes at least one of application setting, operating parameter setting, and an application shortcut.

An executor of the method may be a mobile terminal.

It may be understood that in actual operations, the application setting in application objects may be volume size setting, font size setting, and the like; the operating parameter may be a chatting record, a browsing record, a song lyric, and the like; and the application shortcut may be one or a combination of multiple of a browser shortcut, a microblog shortcut, a game shortcut, a shortcut of an application running on the background, an information shortcut, a keyboard shortcut, a contact shortcut, and the like. This is not specifically limited herein.

As can be seen from the above, in the method for calling an application object provided in this embodiment of the present invention, a state change of a mobile terminal is considered as a conscious operation of a user, and whether an application object needs to be called is determined according to a motion state and an inclination angle of the mobile terminal. This is convenient and efficient and easy to operate, thereby improving user experience.

Optionally, as shown in FIG. 2, which is a flowchart of another method for calling an application object according to an embodiment of the present invention, judging whether a motion state and an inclination angle of the mobile terminal meet a preset condition may include: when it is determined that an acceleration of the mobile terminal is smaller than or equal to a preset threshold and it is determined that the inclination angle of the mobile terminal meets a preset inclination range, determining that the motion state and the inclination angle of the mobile terminal meet the preset condition.

Optionally, in some implementation manners, that the acceleration of the mobile terminal is smaller than or equal to a preset threshold may be first determined; and then the inclination angle of the mobile terminal is determined. Based on this scenario, step 12 may include:
Step 12-1: Determine that the acceleration of the mobile terminal is smaller than or equal to a preset threshold.

Optionally, in this implementation manner, an acceleration sensor may be used to determine whether the acceleration of the mobile terminal is smaller than or equal to the preset threshold.

It may be understood that the acceleration sensor whose English name is acceleration sensor is a sensor that can sense the acceleration and can convert the acceleration into an available output signal. Generally, the acceleration sensor utilizes an internal feature that crystal deformation occurs due to an acceleration. Because this deformation generates voltage, the acceleration can be converted into a voltage output so long as a relationship between the generated voltage and the imposed acceleration is computed.

In this method embodiment of the present invention, if it is determined that the acceleration of the mobile terminal is smaller than or equal to a preset threshold, it can be considered that the mobile terminal is in a relatively stable state, where the relatively stable state may include, for example, that the mobile terminal stands still on a desktop, that the user holds the mobile terminal without doing large amplitude motions, and that the user carries the mobile terminal or places the mobile terminal in a car moving at a constant speed. On the contrary, if it is determined that the acceleration of the mobile terminal is greater than the preset threshold, it is considered that the mobile terminal is not in a relatively stable state. In this case, the mobile terminal may maintain a current motion state, be used according to a user need, or the like. This is not specifically limited in this embodiment of the present invention.

In the prior art, it may be considered that an acceleration sensor includes three axes, an X axis, a Y axis, and a Z axis. When the mobile terminal is in a relatively stable state, the output acceleration value of the acceleration sensor is 0, that is, a sum of the acceleration vectors on the X axis, the Y axis, and the Z axis should be equal to 0. It may be understood that 0 is only a theoretical reference value. In actual operations, because errors of the acceleration sensor and temperature changes affect measurement precision, a preset threshold may be used to make determination and avoid wrong triggering. That is to say, if the acceleration value is smaller than or equal to the preset threshold, it can be considered that the mobile terminal is in a relatively stable state; and on the contrary, if the acceleration value is greater than the preset threshold, it can be considered that the mobile terminal is not in a relatively stable state. Therefore, the acceleration information of the acceleration sensor can be used to acquire the motion state of the mobile terminal.

Further, after it is determined that the acceleration of the mobile terminal is smaller than or equal to the preset threshold (step 12-1), the method may further include:
Step 12-2: Determine that the inclination angle of the mobile terminal meets a preset inclination angle range.

Optionally, in this implementation manner, a gyroscope sensor may be used to determine whether the inclination angle of the mobile terminal meets a preset inclination range.

It may be understood that the gyroscope sensor is an instrument that can accurately determine a position of a moving object. A working principle of the gyroscope sensor is as follows: When a pointing direction of a rotation axis of a rotating object is not affected by an external force, the rotation axis of the rotating object remains unchanged; the gyroscope sensor maintains the direction according to this principle, then reads the pointing direction of the axis, and automatically transmits a data signal to a control system.

In actual operations, the gyroscope sensor can detect an angle of 360 degrees, and determine whether an inclination angle meets a preset inclination range. It is found through practices that optionally, the preset inclination range may be set to an inclination angle ranging from 15 degrees to 75 degrees, that is, when the inclination angle of the mobile terminal is 15 degrees to 75 degrees, it can be considered that the inclination angle meets the preset inclination range, and then an application object is called.

It may also be considered that the gyroscope sensor includes three axes, an X axis, a Y axis, and a Z axis, and output data of the gyroscope sensor is angular velocities rotating around the foregoing three axes. When the mobile terminal is placed vertically, the vertical screen direction is the Y axis direction of the gyroscope sensor. When the mobile terminal is inclined to the left or right, and then put in a normal position, the gyroscope sensor can perform time integration on an angular velocity rotating around the Y axis to acquire an angular displacement when the mobile terminal is inclined to the left or right, where the angular displacement refers to a radian of inclining to the left or inclining to the right when the mobile terminal is placed vertically, that is, the inclination angle. Therefore, by using this feature of the gyroscope sensor, a motion state of inclining to the left or right can be identified when the mobile terminal is placed vertically.

Further, after it is determined that the inclination angle of the mobile terminal meets the preset inclination range (step 12-2), the method may further include:
Step 12-3: Call the application object.

Optionally, when it is determined that the acceleration of the mobile terminal is smaller than or equal to the preset threshold and it is determined that the inclination angle of the mobile terminal meets the preset inclination range, it can be determined that the motion state and the inclination angle of the mobile terminal meet the preset condition, and then the application object is called.

The application object may include at least one of application setting, operating parameter setting, and an application shortcut. A user may set the called application object according to different scenarios and applications. For example, calling application setting may be calling volume size setting or font size setting; calling an operating parameter may be calling a chatting record, a browsing record, and a song lyric; and a called program shortcut may be one or a combination of multiple of a browser shortcut, a microblog shortcut, a game shortcut, a shortcut of an application running on the background, an information shortcut, a keyboard shortcut, and a contact shortcut. On the contrary, if it is determined that the inclination angle of the mobile terminal does not meet the preset inclination angle, that is, if the inclination angle does not meet the preset condition, it can be considered that the user does not have the intention or need to call the application object. In this case, an application or a task currently running on the mobile terminal may be maintained. This is not specifically limited in this embodiment of the present invention.

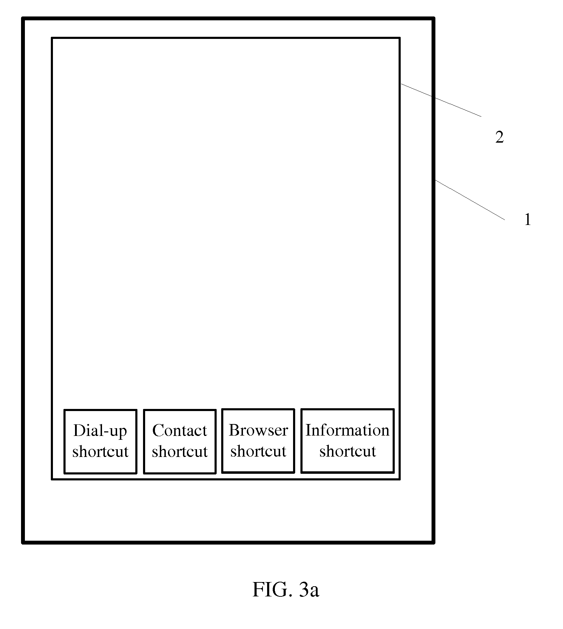

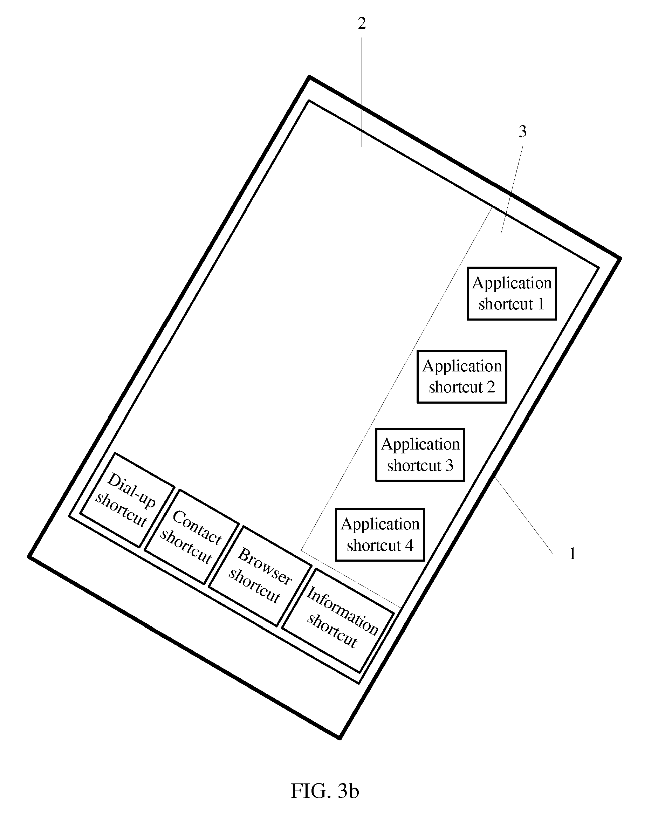

In this method embodiment of the present invention, as shown in FIG. 3a, it is assumed that the mobile terminal is mobile phone 1. Generally, when an interface of mobile phone screen 2 is a main interface, an information shortcut, a contact shortcut, a dial-up shortcut, and a browser shortcut may be disposed at a lower part of the interface for a user to select. When mobile phone 1 is in a relatively stable state, that is, when it is determined that an acceleration of the mobile phone is smaller than or equal to a preset threshold and it is determined that an inclination angle of mobile phone 1 meets a preset inclination range, it can be considered that changing this state is a conscious operation of the user, so that preset application object 3 is called quickly, where the called application object 3 may be some commonly used application shortcuts, as shown in FIG. 3b. It may be understood that the user may preset the called application object 3 according to different scenarios and needs, which is easy to operate and not specifically limited herein.

As can be seen from the above, in the method for calling an application object provided in this embodiment of the present invention, an acceleration sensor and a gyroscope sensor are used to determine a state of a mobile terminal; because the acceleration sensor and the gyroscope sensor are relatively sensitive, it can be accurately determined that a motion state and an inclination angle of the mobile terminal meet a preset condition, so that an application object is called, which simplifies user operations and improves user experience.

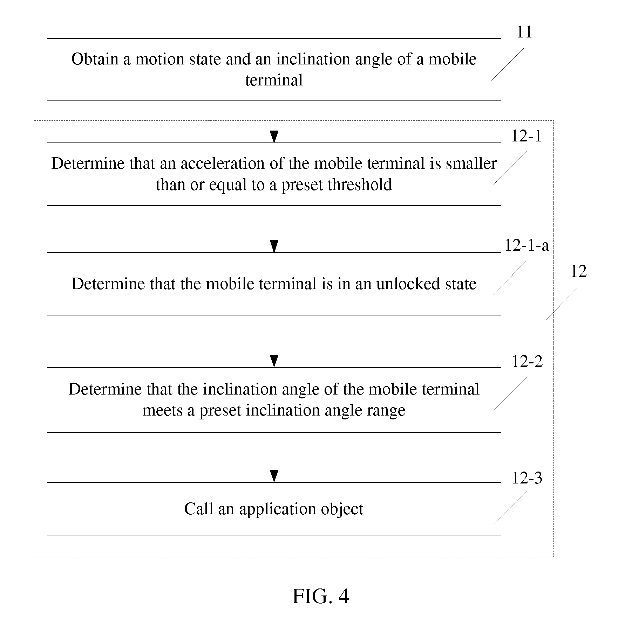

Optionally, as shown in FIG. 4, which is a flowchart of another method for calling an application object according to an embodiment of the present invention, before it is determined that the inclination angle of the mobile terminal meets a preset inclination range (step 12-2), the method may further include:
Step 12-1-a: Determine that the mobile terminal is in an unlocked state.

If it is determined that the mobile terminal is in an unlocked state, the step of determining whether the inclination angle of the mobile terminal meets the preset inclination range is triggered.

It may be understood that if it is determined that the mobile terminal is in a locked state, it can be considered that the user does not have an intention or need to operate the mobile terminal, because the user needs to operate the mobile terminal when the mobile terminal is in an unlocked state. After it is determined that the mobile terminal is in an unlocked state, whether the inclination angle of the mobile terminal meets the preset inclination range is determined.

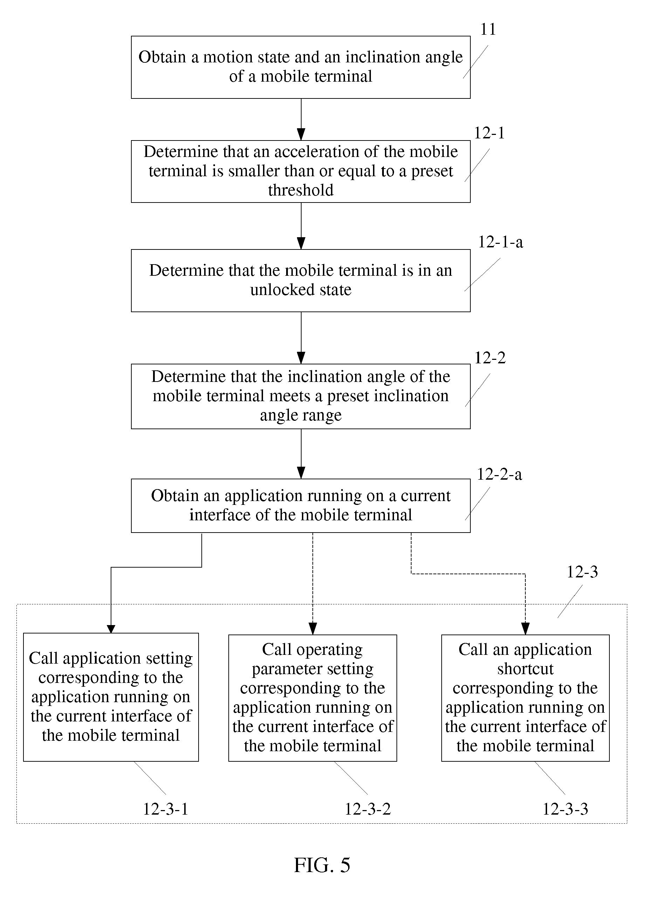

Optionally, as shown in FIG. 5, before the application object is called (step 12-3), the method may further include:
Step 12-2-a: Acquire an application running on a current interface of the mobile terminal.

In this implementation manner of the present invention, after it is determined that the motion state and the inclination angle of the mobile terminal meet the preset condition and an application running on the current interface is acquired, the mobile terminal may automatically call an application object corresponding to the application. It should be noted that the application running on the current interface refers to a running application displayed on the current interface and does not include an application which is not closed by the user and is still running on the background.

An optional implementation manner of calling an application object corresponding to the application is as follows: The mobile terminal searches, according to the acquired application running on the current interface, a preset correspondence table between applications and application objects to acquire and call an application object corresponding to the application.

It may be understood that the correspondence table between applications and application objects is preset in the mobile terminal. In this implementation manner, the application object may include at least one of application setting, operating parameter setting, and an application shortcut.

In addition, in this embodiment of the present invention, correspondence information between applications and application objects may also be recorded by using an Extensible Markup Language (Extensible Markup Language, XML) configuration file, which is not specifically limited herein.

In this implementation manner, after step 12-2-a, the calling the application object (step 12-3) may specifically include:
Step 12-3-1: Call application setting corresponding to the application running on the current interface of the mobile terminal.
Step 12-3-2: Call operating parameter setting corresponding to the application running on the current interface of the mobile terminal.
Step 12-3-3: Call an application shortcut corresponding to the application running on the current interface of the mobile terminal.

It should be noted that after the application running on the current interface is acquired (step 12-2-a), step 12-3-1, step 12-3-2, or step 12-3-3 may be executed, that is, the application setting, the operating parameter setting, or the shortcut may be called, which is not specifically limited herein.

It may be understood that corresponding to step 12-3-1, when the acquired application running on the current interface is ebook browsing, calling the application setting corresponding to ebook browsing may be calling one or a combination of multiple of the following application settings: adding favorite, adjusting brightness, displaying section, and adjusting font size; corresponding to step 12-3-2, when the acquired application running on the current interface is webpage browsing, calling an operating setting corresponding to webpage browsing may be calling a thumbnail image of a browsed webpage; corresponding to step 12-3-3, when the acquired application running on the current interface is video playing, video playing is paused, and calling an application shortcut corresponding to video playing may be calling one or a combination of multiple of an information shortcut, a keyboard shortcut, a contact shortcut, a browser shortcut, and a shortcut of an application running on the background.

As can be seen from the above, in the method for calling an application object provided in this embodiment of the present invention, when an application object is called, an application running on a current interface of a mobile terminal is first acquired, and then an application object corresponding to the application is called according to the application, where the application object may be preset by a user, so that the called application object is more pertinent and meets user requirements better, which greatly improves user experience.

To make the technical solution of the present invention more comprehensible, the method provided in this embodiment of the present invention is analyzed and described by using a few specific application scenarios in the following. In the described application scenarios, it is assumed that the mobile terminal is a mobile phone.

In one application scenario of this embodiment of the present invention, when the acquired application running on a current interface of the mobile phone is video playing, that is, a user is watching a video by using the mobile phone, the screen of the mobile phone is an interface displaying a video in a full-screen manner. If the user needs to send a short message at this time, the user only needs to incline the mobile phone to a certain angle, and the inclination angle meets a preset inclination angle range; if the preset inclination angle range is 15 degrees to 75 degrees, a video image is automatically paused and meanwhile a set application object is displayed on the screen; if the application object is an application shortcut, the application shortcut may include one or a combination of multiple of an information shortcut, a keyboard shortcut, a contact shortcut, a browser shortcut, and a shortcut of an application running on the background. At this time, the user only needs to click the information shortcut on the screen of the mobile phone to edit a short message.

It may be understood that the application object may also be set to one or more other common program shortcuts according to user requirements. After the editing and sending of the short message are complete, the screen of the mobile phone may be set to going back to the video interface automatically.

In another application scenario of this embodiment of the present invention, when the acquired application running on a current interface of the mobile phone is webpage browsing, that is, a user is browsing a webpage by using the mobile phone, the screen of the mobile phone is an interface displaying webpage content in a full-screen manner. If the user wants to view a previously opened webpage interface, the user only needs to incline the mobile phone to a certain angle, and the inclination angle meets a preset inclination angle range. In this case, the screen displays a thumbnail image of a browsed webpage. At this time, the user only needs to click the thumbnail image of the webpage to enter the webpage that needs to be opened.

It may be understood that in this implementation manner, the thumbnail image of the browsed webpage may be considered as operating parameter setting corresponding to the application (that is, webpage browsing) running on the current interface of the mobile phone.

In another application scenario of this embodiment of the present invention, when the acquired application running on a current interface is ebook browsing, that is, a user is browsing an ebook by using the mobile phone, the screen of the mobile phone is an interface displaying content of the ebook in a full-screen manner. If the user wants to add a favorite, the user only needs to incline the mobile phone to a certain angle, and the inclination angle meets a preset inclination angle range. In this case, the screen displays a set application object. If the application object is application setting corresponding to ebook browsing, the application setting may include one or a combination of multiple of adding favorite, adjusting brightness, displaying section, and adjusting font size. At this time, the user only needs to click an Add Favorite icon on the screen of the mobile phone to enter an Add Favorite interface.

It may be understood that after the adding a favorite is complete, the mobile terminal may be set to going back to the ebook browsing interface automatically.

As can be seen from the above, according to the method for calling an application object and the mobile terminal provided in the embodiments of the present invention, a state change of a mobile terminal is considered as a conscious operation of a user, and whether an application object is called is determined according to the state of the mobile terminal, which is convenient and efficient and easy to operate; and an application can be switched quickly without using any hard button, which improves user experience and conforms to development requirements of mobile terminals with a full-sized screen. In addition, a user may preset content displayed by different applications in an inclined state, which is a new human-computer interaction model.

To better implement the technical solutions provided in the embodiments of the present invention, an embodiment of the present invention also provides a related apparatus configured to implement the foregoing method. Meanings of terms in this embodiment are the same as those in the foregoing method. For specific implementation details, reference may be made to the descriptions in the method embodiments.

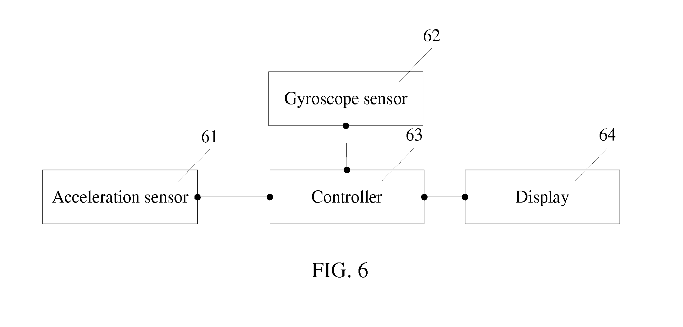

Referring to FIG. 6, FIG. 6 is a schematic structural diagram of a mobile terminal according to an embodiment of the present invention, where the mobile terminal includes:
an acceleration sensor 61, configured to acquire a motion state of the mobile terminal;
a gyroscope sensor 62, configured to acquire an inclination angle of the mobile terminal;
a controller 63, configured to, when the motion state acquired by the acceleration sensor 61 and the inclination angle acquired by the gyroscope sensor 62 meet a preset condition, control calling of an application object, where the application object includes at least one of application setting, operating parameter setting, and an application shortcut; and
a display 64, configured to display the application object called by the controller 63.

It may be understood that in actual operations, the application setting in application objects may be volume size setting, font size setting, and the like; the operating parameter may be a chatting record, a browsing record, a song lyric, and the like; the application shortcut may be one or a combination of multiple of a browser shortcut, a microblog shortcut, a game shortcut, a shortcut of an application running on the background, an information shortcut, a keyboard shortcut, and a contact shortcut, which is not specifically limited herein.

As can be seen from the above, according to the mobile terminal provided in the embodiment of the present invention, a state change of the mobile terminal is considered as a conscious operation of a user, and whether an application object needs to be called is determined according to a motion state and an inclination angle of the mobile terminal. This is convenient and efficient and easy to operate, thereby improving user experience.

Optionally, the acceleration sensor 61 is specifically configured to determine that an acceleration of the mobile terminal is smaller than or equal to a preset threshold; the gyroscope sensor 62 is specifically configured to determine that the inclination angle of the mobile terminal meets a preset inclination range; and the controller 63 is specifically configured to, when the acceleration acquired by the acceleration sensor 61 is smaller than or equal to the preset threshold and the inclination angle acquired by the gyroscope sensor 62 meets the preset inclination range, determine that the motion state and the inclination angle of the mobile terminal meet the preset condition, and call the application object.

Optionally, the controller 63 is further configured to, before the gyroscope sensor 62 determines that the inclination angle of the mobile terminal meets the preset inclination range, determine that the mobile terminal is in an unlocked state.

Optionally, before controlling the calling of the application object, the controller 63 is further configured to acquire an application running on a current interface; after acquiring the application running on the current interface, the controller 53 calls application setting corresponding to the application running on the current interface of the mobile terminal, or operating parameter setting corresponding to the application running on the current interface of the mobile terminal, or an application shortcut corresponding to the application running on the current interface of the mobile terminal.

Optionally, when the application running on the current interface and acquired by the controller 63 is video playing, the controller 63 controls pausing of the video playing; the display 64 is configured to display one or a combination of multiple of an information shortcut, a keyboard shortcut, a contact shortcut, a browser shortcut, and a shortcut of an application running on the background.

When the application running on the current interface and acquired by the controller 63 is webpage browsing, the display 64 is configured to display a thumbnail image of a browsed webpage.

When the application running on the current interface and acquired by the controller 63 is ebook browsing, the display 64 is configured to display one or a combination of multiple of the following application settings: adding favorite, adjusting brightness, displaying section, and adjusting font size.

It may be understood that in the mobile terminal provided in this embodiment of the present invention, functions of the functional modules may be specifically implemented according to the methods in the foregoing method embodiments. For details about a specific implementation process, reference may be made to the related descriptions of the foregoing method embodiments, which is not further described herein.

As can be seen from the above, according to the mobile terminal provided in this embodiment of the present invention, a state change of the mobile terminal is considered as a conscious operation of a user, and whether an application object needs to be called is determined according to the state of the mobile terminal, which is convenient and efficient and easy to operate. An acceleration sensor and a gyroscope sensor are used to determine the state of the mobile terminal, which can accurately determine that a motion state and an inclination angle of the mobile terminal meet a preset condition. In addition, when an application object is called, an application running on a current interface of the mobile terminal is first acquired, and then an application object corresponding to the application is called according to the application, where the application object may be preset by a user, so that the called application object is more pertinent and meets user requirements better, which greatly improves user experience.

It can be clearly understood by a person skilled in the art that, for convenience and brevity of description, for details about specific working processes of the foregoing apparatus and units or modules in the apparatus, reference may be made to corresponding processes in the foregoing method embodiments, which is not further described herein.

A person of ordinary skill in the art can understand that all of a part of the steps of the method embodiments may be implemented by a program instructing relevant hardware. The program may be stored in a computer readable storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A method for calling an application object and a mobile terminal provided in the present invention have been described in detail above. A person skilled in the art can make modifications to the specific implementation mode and application scope according to the idea of the embodiments of the present invention. Therefore, content of this specification should not be understood as a limitation on the present invention.

## Claims

1. A method for calling an application object, comprising:
acquiring a motion state and an inclination angle of a mobile terminal; and
when the motion state and the inclination angle of the mobile terminal meet a preset condition, calling an application object, wherein the application object comprises at least one of application setting, operating parameter setting, and an application shortcut.

2. The method according to claim 1, wherein determining whether the motion state and the inclination angle of the mobile terminal meet a preset condition comprises:
when determining that an acceleration of the mobile terminal is smaller than or equal to a preset threshold and determining that the inclination angle of the mobile terminal meets a preset inclination range, determining that the motion state and the inclination angle of the mobile terminal meet the preset condition.

3. The method according to claim 2, wherein before the determining that the inclination angle of the mobile terminal meets a preset inclination range, the method further comprises:
determining that the mobile terminal is in an unlocked state.

4. The method according to any one of claims 1 to 3, wherein:
before the calling the application object, the method further comprises:
acquiring an application running on a current interface of the mobile terminal; and
the calling the application object specifically comprises:
calling application setting corresponding to the application running on the current interface of the mobile terminal, or operating parameter setting corresponding to the application running on the current interface of the mobile terminal, or an application shortcut corresponding to the application running on the current interface of the mobile terminal.

5. The method according to claim 4, wherein:
when the acquired application running on the current interface is video playing, pausing the video playing and calling one or a combination of multiple of an information shortcut, a keyboard shortcut, a contact shortcut, a browser shortcut, and a shortcut of an application running on the background.

6. The method according to claim 4, wherein:
when the acquired application running on the current interface is webpage browsing, calling a thumbnail image of a browsed webpage.

7. The method according to claim 4, wherein:
when the acquired application running on the current interface is ebook browsing, calling one or a combination of multiple of the following application settings: adding favorite, adjusting brightness, displaying section, and adjusting font size.

8. A mobile terminal, comprising:
an acceleration sensor, configured to acquire a motion state of the mobile terminal;
a gyroscope sensor, configured to acquire an inclination angle of the mobile terminal;
a controller, configured to, when the motion state acquired by the acceleration sensor and the inclination angle acquired by the gyroscope sensor meet a preset condition, control calling of an application object, wherein the application object comprises at least one of application setting, operating parameter setting, and an application shortcut; and
a display, configured to display the called application object.

9. The mobile terminal according to claim 8, wherein:
the acceleration sensor is specifically configured to determine that an acceleration of the mobile terminal is smaller than or equal to a preset threshold;
the gyroscope sensor is specifically configured to determine that the inclination angle of the mobile terminal meets a preset inclination range; and
the controller is specifically configured to, when the acceleration acquired by the acceleration sensor is smaller than or equal to a preset threshold and the inclination angle acquired by the gyroscope sensor meets the preset inclination range, determine that the motion state and the inclination angle of the mobile terminal meet a preset condition, and call the application object.

10. The mobile terminal according to claim 9, wherein:
the controller is further configured to, before the gyroscope sensor determines that the inclination angle of the mobile terminal meets the preset inclination range, determine that the mobile terminal is in an unlocked state.

11. The mobile terminal according to any one of claims 8 to 10, wherein:
before controlling the calling of the application object, the controller is further configured to acquire an application running on a current interface; and after acquiring the application running on the current interface, the controller calls application setting corresponding to the application running on the current interface of the mobile terminal, or operating parameter setting corresponding to the application running on the current interface of the mobile terminal, or an application shortcut corresponding to the application running on the current interface of the mobile terminal.

12. The mobile terminal according to claim 11, wherein:
when the application running on the current interface and acquired by the controller is video playing, the controller controls pausing the video playing; and
the display is configured to display one or a combination of multiple of an information shortcut, a keyboard shortcut, a contact shortcut, a browser shortcut, and a shortcut of an application running on the background.

13. The mobile terminal according to claim 11, wherein:
when the application running on the current interface and acquired by the controller is webpage browsing, the display is configured to display a thumbnail image of a browsed webpage.

14. The mobile terminal according to claim 11, wherein:
when the application running on the current interface and acquired by the controller is ebook browsing, the display is configured to display one or a combination of multiple of the following application settings: adding favorite, adjusting brightness, displaying section, and adjusting font size.
